# EUROPEAN PATENT APPLICATION

(11) **EP 3 640 897 A1**
(43) Date of publication of application: **22.04.2020**
(21) Application number: 19203562.4
(22) Date of filing: 16.10.2019
(51) Int. Cl.: G07C 9/00

(54) **LOCKING/UNLOCKING SYSTEM AND RADIO COMMUNICATION METHOD**

(30) Priority: 17.10.2018 JP 2018196186
(71) Applicant: Panasonic Intellectual Property Management Co., Ltd., Osaka-shi, Osaka 540-6207 (JP)
(72) Inventor: SUGITANI, Toshiyuki, Osaka, 540-6207 (JP)
(74) Representative: Eisenführ Speiser

(57) **Abstract**

To provide a locking/unlocking system using inexpensive radio communication with high security. When a locking/unlocking operation is performed in remote controller (200), it is indicated to intercom master device (100) via encrypted communication that the locking/unlocking operation is performed, and electric lock (110) is locked/unlocked according to the operation performed in remote controller (200). Further, remote controller (200) transmits an unencrypted message to intercom master device (100) at prescribed intervals. When there is no communication with remote controller (200) for a prescribed length of time, intercom master device (100) locks electric lock (110).

## Description

### Technical Field

The present invention relates to a locking/unlocking system that locks/unlocks entrances via radio communication and to a radio communication method that transmits packets from a transmitting station to a receiving station via radio communication.

### Background Art

Recently, locking/unlocking systems that lock/unlock entrances via radio communication have been spread. Broadly spread are a system with which the entrance is locked/unlocked by button operations provided to a terminal apparatus, and a locking/unlocking system with which the entrance is unlocked automatically when a user carrying a terminal apparatus approaches the entrance by the terminal apparatus communicating automatically.

For example, for a locking/unlocking system loaded on a vehicle, there is disclosed a technique which automates locking/unlocking of doors of the vehicle by transmitting a call signal to a terminal apparatus from the vehicle side and unlocking the doors when there is a response from the terminal apparatus and locking the door when there is no response from the terminal apparatus (see PTL 1).

Further, there is also disclosed a technique which provides a communication apparatus near a front door, unlocks the front door when communication is received from an electronic key, and locks the door by detecting whether or not a person is inside home by using a human detection sensor provided in the home (see PTL 2).

Such home-use locking/unlocking system performs locking/unlocking by using a detected result of the human detection sensor regarding whether or not there is a person staying home and the communication with the electronic key. Therefore, the number of communications with the electronic key for locking/unlocking can be decreased, so that it is possible to avoid increase in the risk of having fake electronic keys by intercepting the communication.

In the meantime, in the field of radio communication, spread of data communication using radio connection is remarkable, and increase in the communication speed, reduction in size of radio communication apparatuses, low power consumption, and improvement in the security technology are being advanced.

Techniques for achieving low power consumption of radio communication apparatuses used for sensors and the like are disclosed in PTL 3 and PTL 4. In PTL 3 and PTL 4, disclosed are techniques for decreasing the power consumption of the radio communication apparatus through suppressing the power consumption on standby by setting the power supply of main components used for radio communication such as a radio section and a control section to OFF state until there is detection by the sensor, storing failure conditions at the time of communication in a state storage section to which the power is supplied at all times, and switching a master-device searching operation for the radio communication when the sensor is reacted in a normal state and a state where a communication failure is occurring.

Further, NPL 1, NPL 2, and NPL 3 stipulate radio communication of DECT (Digital Enhanced Cordless Telecommunications) ((R)of ETSI) mode broadly spread worldwide as a communication mode for digital cordless phones. Use of the DECT-mode radio devices is authorized also in Japan, and radio communication apparatuses such as cordless phones and radio intercoms are being put into practical use. Further, recently, systems for controlling home appliances inside home from outside, home-use security systems, and the like have been spread, and development of radio communication used for communication between devices of such home automation network is being advanced. Stipulated in NPL 4 is a packet communication method suited for communication between the devices of the home automation network based on the DECT-mode radio communication (hereinafter, communication stipulated in NPL 4 is referred to as "DECT ULE communication").

With such packet communication, data is stored in numbered packets, the data is transmitted/received in a unit of packet, and retransmission control is performed by using the numbers applied to the packets to transmit/receive the data. In DECT ULE communication, radio communication is stopped when there is no data to be transmitted/received and, when starting transmission of data, packet communication is restarted with a simple sequence and performed by using consecutive packet numbers regardless whether the radio communication is stopped so as to achieve low power consumption and shortening of transmission delay of the data. Further, with such packet communication, encryption of communication data and data authentication are performed for improving the security, and security of the packet communication is improved by encrypted communication using Counter with CBC-MAC (cipher block chaining message authentication code) in the case of DECT ULE communication.

### Citation List

### Patent Literature

PTL 1
   Japanese Patent Application Laid-Open No. 2003-201784
PTL 2
   Japanese Patent Application Laid-Open No. 2018-115447
PTL 3
   Japanese Patent Application Laid-Open No. 2013-98884
PTL 4
   Japanese Patent Application Laid-Open No. 2013-236393

### Non Patent Literature

NPL 1
   ETSI EN 300 175-2: "Digital Enhanced Cordless Telecommunications (DECT); Common Interface (CI); Part 2: Physical Layer (PHL)"
NPL 2
   ETSI EN 300 175-3: "Digital Enhanced Cordless Telecommunications (DECT); Common Interface (CI); Part 3: Medium Access Control (MAC) layer"
NPL 3
   ETSI EN 300 175-5: "Digital Enhanced Cordless Telecommunications (DECT); Common Interface (CI); Part 5: Network (NWK) layer"
NPL 4
   ETSI TS 102 939-1: " Digital Enhanced Cordless Telecommunications (DECT); Ultra Low Energy(ULE); Machine to Machine Communications; Part 1; Home Automation Network (Phase 1)"

### Summary of Invention

### Technical Problem

Incidentally, with the above-described locking/unlocking system loaded on the vehicle, radio communication for calls from the vehicle side and responses from the terminal apparatus is performed many times for locking/unlocking the doors. Therefore, when communication is intercepted and the communication data is analyzed, the risk of having fake terminal devices increases.

Further, with the above-described home-use locking/unlocking system, the human detection sensor is used for performing locking/unlocking. Therefore, it is necessary to use a high-performance human detection sensor in order to prevent, after the user goes out, the human detection sensor from mis-determining that there is a person staying home and the door from being left unlocked, so that the price of the apparatus is increased.

Further, the above-described radio communication devices and the radio communication methods thereof focus on the operations in a state where the apparatuses are in a communicable state, and there is no technique disclosed regarding decrease in the power consumption in an uncommunicable state and regarding recovery and the like when there is a communication error.

The present invention is designed to overcome such problems of the conventional techniques, and main objects thereof are to provide an inexpensive locking/unlocking system with which a fake terminal apparatus is difficult to be forged so that high security performance can be achieved even when radio communication between the terminal apparatus and the electric apparatus is intercepted and the communication data thereof is analyzed, and to provide a communication method suited for performing packet communication while moving between a communicable area and an uncommunicable area.

### Solution to problem

A locking/unlocking system according to one aspect of the present invention includes an electric key apparatus and a terminal apparatus, the electric key apparatus including an electric lock for locking/unlocking an entrance, in which the terminal apparatus includes: a first radio section that communicates by radio with the electric lock apparatus; an operation section for performing a locking operation or an unlocking operation for the electric lock apparatus; an encryption section that generates a first signal by encrypting a message for indicating the locking operation or the unlocking operation; and a first control section that controls the first radio section to transmit an unencrypted second signal for indicating predetermined information to the electric lock apparatus at a predetermined timing, and controls the first radio section to transmit the first signal to the electric lock apparatus, and the electric lock apparatus includes: a second radio section that communicates by radio with the terminal apparatus; a decryption section that decrypts the first signal transmitted from the terminal apparatus; and a second control section that controls the electric lock to lock/unlock the entrance according to an indicated content of the message of the first signal.

### Advantageous Effects of Invention

With the present invention, it is possible to improve the security of radio communication and also to decrease the price.

### Brief Description of Drawings

FIG. 1 is a schematic view illustrating an outline of a locking/unlocking system according to Embodiment 1;
FIG. 2 is a block diagram illustrating configuration examples of an intercom master device and an entrance slave device of the locking/unlocking system according to Embodiment 1;
FIG. 3 is a block diagram illustrating a configuration example of a remote controller of the locking/unlocking system according to Embodiment 1;
FIG. 4 is a sequence chart illustrating a sequence example of a radio communication method according to Embodiment 1; and
FIG. 5 is a sequence chart illustrating a sequence for initializing communication numbers of the locking/unlocking system according to Embodiment 1.

### Description of Embodiments

The locking/unlocking system according to a first aspect of the invention designed for overcoming the above-described problems is a locking/unlocking system that includes an electric key apparatus and a terminal apparatus, the electric key apparatus including an electric lock for locking/unlocking an entrance, in which: the terminal apparatus includes a first radio section that communicates by radio with the electric lock apparatus, an operation section on which a locking operation or an unlocking operation is performed for the electric lock apparatus, an encryption section that generates a first signal by encrypting a message for indicating the locking operation or the unlocking operation, and a first control section that controls the first radio section to transmit an unencrypted second signal for indicating predetermined information to the electric lock apparatus at a predetermined timing, and controls the first radio section to transmit the first signal to the electric lock apparatus; and the electric lock apparatus includes a second radio section that communicates by radio with the terminal apparatus, a decryption section that decrypts the first signal transmitted from the terminal apparatus, and a second control section that controls the electric lock to lock/unlock the entrance according to indicated content of the message of the first signal.

Thereby, communication for indicating the locking operation or the unlocking operation on the operation section is performed via encrypted communication while the communication other than that is performed without encryption. Therefore, it is possible to decrease the frequency of the encrypted communication, and to decrease the risk of having the radio communication between the electric lock apparatus and the terminal apparatus intercepted and having the method of the encrypted communication for indicating the locking operation or the unlocking operation decrypted.

The encryption section according to a second aspect of the invention designed for overcoming the above-described problems encrypts the message by using an identification number of the electric lock apparatus, an identification number of the terminal apparatus, a communication number updated for each encrypted communication, and a predetermined encryption key to generate the first signal; the decryption section decrypts the first signal by using the identification number of the electric lock apparatus, the identification number of the terminal apparatus, the communication number updated for each encrypted communication, and the predetermined encryption key; and the encryption key is generated when the terminal apparatus is to be registered to the electric lock apparatus.

Thereby, the message for indicating the locking operation or the unlocking operation is encrypted by using the identification number of the electric lock apparatus, the identification number of the terminal apparatus, and the communication number updated for each encrypted communication, so that the encrypted message for indicating the locking operation or the unlocking operation varies for each terminal apparatus and each communication. Therefore, even when the message for indicating the locking operation or the unlocking operation is intercepted, the next message for indicating the locking operation or the unlocking operation cannot be constructed, thereby making it possible to improve the security of the locking/unlocking system.

The second control section according to a third aspect of the invention designed for overcoming the above-described problems controls the electric lock to lock the entrance when no communication with the terminal apparatus occurs for a predetermined length of time or more.

Thereby, the entrance is automatically locked when there is no communication with the terminal apparatus for a predetermined length of time or more. Therefore, it is possible to prevent the user from forgetting to lock, so that the convenience of the user can be increased.

The terminal apparatus according to a fourth aspect of the invention designed for overcoming the above-described problems further includes a first storage section made up of a nonvolatile memory, a second storage section made up of a volatile memory, a battery that supplies power, a timekeeping section that keeps a prescribed time, a third storage section made up of a volatile memory, and a power-supply control section that starts supply of the power to the first storage section, the second storage section, the first radio section, the encryption section, and the first control section when the battery is loaded, when the locking operation or the unlocking operation is performed on the operation section, or when a timer of the timekeeping section is expired, and shuts down supply of the power to the first storage section, the second storage section, the first radio section, the encryption section, and the first control section according to an instruction of the first control section; and the first control section, upon supply of the power, determines whether the battery is loaded, the locking operation or the unlocking operation is performed, or the timer of the timekeeping section is expired, when it is determined that the battery is loaded, reads information necessary for indicating the predetermined information by the second signal from the first storage section and writes the information to the third storage section, sets time to wait before indicating the predetermined information by the second signal to the timekeeping section, and gives an instruction to the power-supply control section to shut down the supply of the power, when it is determined that the locking operation or the unlocking operation is performed, reads information necessary for indicating that the locking operation or the unlocking operation is performed by the first signal from the first storage section, indicates the electric lock apparatus that the locking operation or the unlocking operation is performed by the first signal, updates the information that needs to be updated because of the communication among the information stored in the first storage section, and gives an instruction to the power-supply control section to shut down the supply of the power, and when it is determined that the timer of the timekeeping section is expired, reads the information from the third storage section, indicates the predetermined information to the electric lock apparatus by the second signal, sets time to wait before indicating information predetermined by the second signal to the timekeeping section, and gives an instruction to the power-supply control section to shut down the supply of the power.

Thereby, the power supplied to the radio section, the control section, and the like of the terminal apparatus is shut down in the standby state, so that the battery life can be extended and the convenience can be improved. Further, because the information necessary for the communication when the timer is expired can be maintained even in the standby state, it is unnecessary to read out the information from the nonvolatile memory at the time of performing communication when the timer is expired. Therefore, it is possible to omit the processing time required for the processing for reading out the information from the nonvolatile memory, to shorten the processing time at the time of performing the communication when the timer is expired, to reduce the power consumption, to extend the battery life, and to improve the convenience. Further, when exchanging the battery, the information necessary for the communication performed when the timer is expired is read from the nonvolatile memory and written to the third storage section. Therefore, after exchanging the battery, the user does not need to perform any special operations, thereby improving the convenience.

The electric lock apparatus according to a fifth aspect of the invention designed for overcoming the above-described problems is provided to an intercom master device; the intercom master device includes a second operation section on which a locking operation or an unlocking operation is performed for the electric locking apparatus; and the second control section controls the electric lock to lock/unlock the entrance according to content of a message indicating the locking operation or the unlocking operation transmitted from the intercom master device.

Thereby, an existing intercom system and the locking/unlocking system of the present invention can share the electric lock, the second storage section made up of a general-purpose RAM or the like, and the control section made up of a microcomputer or the like, for example, so that it is possible to suppress the cost compared to the case where the intercom system and the locking/unlocking system are separately installed.

The terminal apparatus according to a sixth aspect of the invention designed for overcoming the above-described problems further includes a battery remaining amount detection section that detects a battery remaining amount; the predetermined information is information regarding the battery remaining amount; the first control section controls the first radio section to include the information regarding the battery remaining amount detected by the battery remaining amount detection section in the second signal and to transmit the second signal to the intercom master device at a predetermined timing; and the intercom master device displays the battery remaining amount of the terminal apparatus.

Thereby, the battery remaining amount of the terminal apparatus is displayed on the intercom master device, so that the user can realize that the battery is almost dead by the display of intercom master device, thereby improving the convenience. Further, because the battery remaining amount is indicated by unencrypted communication, there is no risk of having the method of encryption decrypted even when the communication is intercepted, thereby making it is easy to keep the security.

The radio communication method according to a seventh aspect of the invention designed for overcoming the above-described problems is a radio communication method transmitting data from a transmitting station to a receiving station via radio communication, and the method includes: when transmitting encrypted data from the transmitting station to the receiving station, by the transmitting station, updating a communication number, encrypting transmission data by using a predetermined encryption key and the communication number, and transmitting the encrypted data along with a communication start request, by the receiving station, transmitting a communication starting response upon receiving the communication start request, updating a communication number upon receiving the encrypted data, decrypting the received encrypted data by using the predetermined encryption key and the communication number, and transmitting a data reception response when the decrypted data is proper, by the transmitting station, transmitting a communication disconnection request upon receiving the data reception response, by the receiving station, transmitting a communication disconnection response and stopping the radio communication upon receiving the communication disconnection request, and by the transmitting station, stopping the radio communication upon receiving the communication disconnection response; and when transmitting unencrypted data from the transmitting station to the receiving station, by the transmitting station, transmitting the unencrypted data along with a communication start request, by the receiving station, transmitting the communication starting response and stopping the radio communication upon receiving the communication start request and the unencrypted data, by the transmitting station, transmitting a communication disconnection request upon receiving the data reception response, and by the receiving station, stopping the radio communication upon receiving the communication starting response.

Thereby, the frequency of encrypted communication can be decreased since whether to encrypt or not to encrypt the message for transmission/reception is switched depending on the message to be communicated. Further, it is possible to decrease the risk of having the radio communication between the transmitting station and the receiving station intercepted and having the method of the encrypted communication decrypted. Further, when transmitting/receiving the message to be communicated without encryption, transmission and reception of the message can be checked with a round-trip communication and the communication can be disconnected. Therefore, power consumption for performing the communication can be suppressed, so that it is effective as the radio communication method used for a battery-driven radio device such as the terminal apparatus of the locking/unlocking system.

The radio communication method according to an eighth aspect of the invention designed for overcoming the above-described problems includes: by the transmitting station, setting the communication number to a predetermined initial value and transmitting a request signal for returning the communication number to the initial value when the communication with the receiving station is ceased before receiving a communication disconnect acknowledgement when transmitting the encrypted data from the transmitting station to the receiving station; and by the receiving station, upon receiving the request signal for returning the communication number to the initial value, setting the communication number to the predetermined initial value and transmitting a response signal indicating that the communication number is returned to the initial value.

Thereby, through providing a process for initializing the communication number used for encrypting the massage, automatic recovery becomes possible without any specific operations performed by the user when a communication error occurs at the time of locking/unlocking operations and there is a difference generated in the reception numbers between the transmitting station and the receiving station, thereby making it possible to improve the convenience. Especially, it is assumed that the terminal apparatus of the locking/unlocking system is frequently used in a poor communication condition in the vicinity of the border of the reception area, so that the communication method that recovers automatically when a communication error occurs is effective for improving the convenience of the user. Further, in unencrypted communication, messages are communicated without using the communication numbers. Therefore, it is unnecessary to initialize the communication number even when there is a communication error generated in the middle of unencrypted communication, so that the power consumption for the recovery processing can be suppressed in the unencrypted communication.

Subsequently, Embodiment of the present invention will be described by referring to the accompanying drawings.

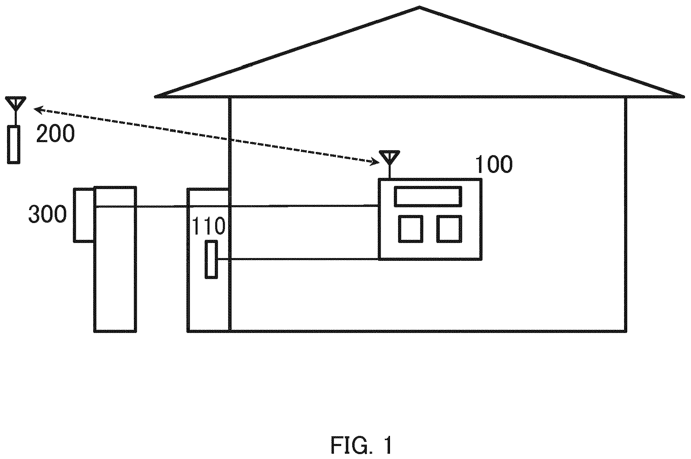

First, outline of operations of the locking/unlocking system according to Embodiment 1 will be described by using FIG. 1. FIG. 1 is a schematic chart illustrating the outline of the locking/unlocking system according to Embodiment 1.

As illustrated in FIG. 1, the locking/unlocking system according to Embodiment 1 is made up of: intercom master device 100 operating as an electric lock apparatus; electric lock 110 for locking/unlocking a key of an entrance connected to intercom master device 100; and remote controller 200 operating as a terminal apparatus. Further, entrance slave device 300 is also illustrated in FIG. 1.

Next, operations of the locking/unlocking system will be described by using FIG. 1. When an unlocking operation is performed via remote controller 200, a radio signal of an unlock request is encrypted and transmitted to intercom master device 100. When the unlock request is received at intercom master device 100, electric lock 110 is unlocked. Similarly, when a locking operation is performed via remote controller 200, a radio signal of a lock request is encrypted and transmitted to intercom master device 100. When the lock request is received at intercom master device 100, the electric lock 110 is locked. Further, remote controller 200 regularly transmits a radio signal for indicating battery remaining amount to intercom master device 100 without encryption. Intercom master device 100 displays the state of the battery of remote controller 200 on a display section according to the battery remaining amount notification transmitted from remote controller 200. Further, when the battery remaining amount notification is not transmitted from remote controller 200 for a specific length of time, intercom master device 100 determines that the owner of remote controller 200 has gone out and locks electric lock 110.

Further, when a call button (not illustrated) of entrance slave device 300 is pushed, intercom master device 100 rumbles and indicates that there is a visitor. By responding thereto via intercom master device 100, users of entrance slave device 300 and intercom master device 100 can have a telephonic conversation. Further, electric lock 110 is locked/unlocked by operating intercom master device 100. In typical use, when the call button of entrance slave device 300 is pushed by a visitor, a resident staying inside responds thereto by intercom master device 100, has a conversation with the visitor to check the visitor, and unlocks electric lock 110 by operating intercom master device 100 to invite the visitor inside home.

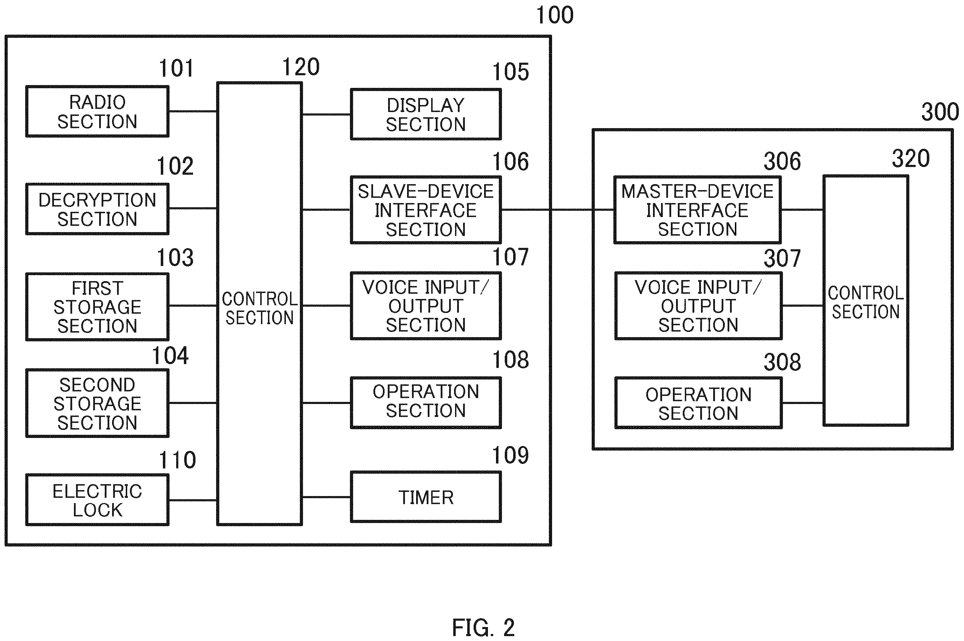

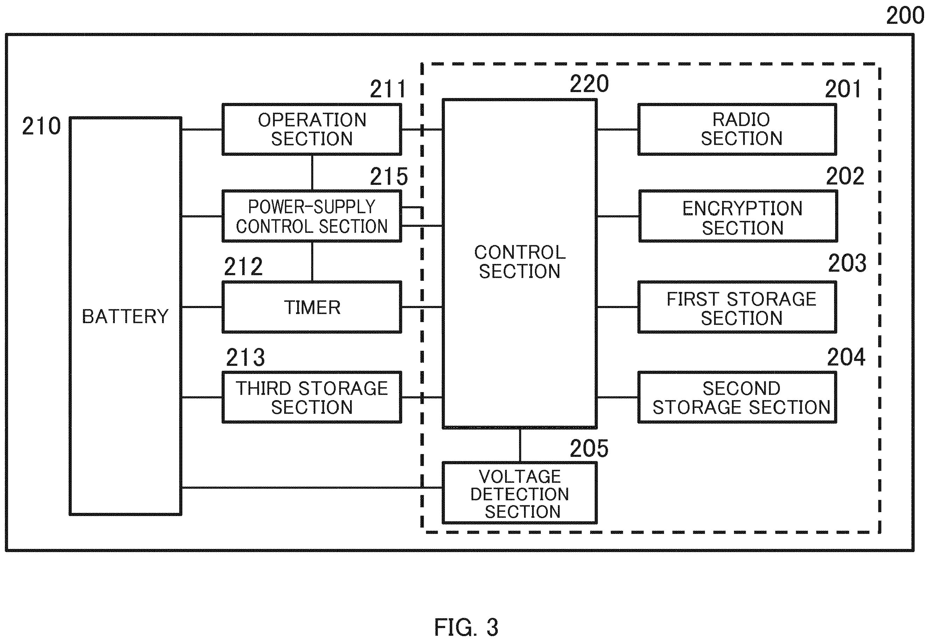

Next, operations of each block of the locking/unlocking system according to Embodiment 1 will be described by using FIG. 2 and FIG. 3. FIG. 2 is a block diagram illustrating configuration examples of the intercom master device and the entrance slave device of the locking/unlocking system according to Embodiment 1, and FIG. 3 is a block diagram illustrating a configuration example of the remote controller of the locking/unlocking system according to Embodiment 1. In FIG. 2 and FIG. 3, same reference numerals are applied to devices and functional blocks indicating the same functions as those of FIG. 1.

First, by using FIG. 2, each block of intercom master device 100 and entrance slave device 300 will be described.

In intercom master device 100, radio section 101 performs transmission/reception radio signals to/from remote controller 200. Decryption section 102 decrypts locking/unlock request signals encrypted and transmitted from remote controller 200. First storage section 103 is made up of a nonvolatile memory, and stores information necessary for performing communication with remote controller 200, such as a master device identification code, a slave device identification code, a slave device connection number, an encryption key, and a packet number. Second storage section 104 is made up of a volatile memory, and stores information necessary for controlling intercom master device 100. Display section 105 displays the locking/unlocking state and the battery state of remote controller 200. Slave device interface section 106 is connected to entrance slave device 300, and made up of a circuit for fetching call signals and voice signals transmitted from entrance slave device 300 and for outputting voice signals to entrance slave device 300. Voice input/output section 107 is made up of a speaker that outputs voice signals, call sound, and the like transmitted from entrance slave device 300, a microphone that inputs voice signals to be outputted to entrance slave device 300, and the like. Operation section 108 is for input operations performed for responding, disconnecting, and setting of devices, for example. Timer 109 measures the time from the last communication performed with remote controller 200, and indicates timer expiration to control section 120 to be described later when a prescribed time passes. Electric lock 110 performs locking/unlocking of a key provided at the door. Control section 120 controls entire operations of intercom master device 100.

Further, in entrance slave device 300, master device interface section 306 is connected to intercom master device 100, and made up of a circuit for fetching voice signals transmitted from intercom master device 100 and for outputting voice signals to intercom master device 100. Voice input/output section 307 is made up of a speaker that outputs voice signals transmitted from intercom master device 100, a microphone that inputs voice signals to be outputted to intercom master device 100, and the like. Operation section 308 is for input operations performed for calls. Control section 320 controls entire operations of entrance slave device 300.

Next, each block of remote controller 200 operating as a terminal apparatus will be described by using FIG. 3.

In remote controller 200, radio section 201 transmits/receives radio signals to/from intercom master device 100. Encryption section 202 encrypts locking/unlock request signals to be transmitted to intercom master device 100. First storage section 203 is made up of a nonvolatile memory, and stores information necessary for performing communication with intercom master device 100, such as a master device identification code, a slave device identification code, a slave device connection number, an encryption key, and a packet number. Second storage section 204 is made up of a volatile memory, and stores information necessary for controlling remote controller 200. Voltage detection section (battery remaining amount detection section) 205 detects power supply voltage and battery remaining amount of battery 210. Battery 210 supplies the power necessary for operations of remote controller 200. Operation section 211 is made up of buttons for inputting locking/unlocking operations and the like. Timer 212 outputs a trigger signal for setting ON the power supplied from battery 210 when set time passes. Third storage section 213 has the power directly supplied from battery 210, and stores information necessary for performing communication when timer 212 is expired. Power-supply control section 215 supplies the power supplied from battery 210 to radio section 201, encryption section 202, first storage section 203, second storage section 204, voltage detection section 205, and control section 220 to be described later when the battery is inserted, when buttons are operated in operation section 211, and when timer 212 is expired, and shuts down the power to radio section 201, encryption section 202, first storage section 203, second storage section 204, voltage detection section 205, and control section 220 to be described later according to an instruction from control section 220. Note that connections of radio section 201, encryption section 202, first storage section 203, second storage section 204, and power-supply control section 215 are omitted in FIG. 3. Control section 220 controls entire operations of remote controller 200.

Next, operations of the locking/unlocking system according to Embodiment 1 thus configured will be described.

First, a slave-device registering operation for registering remote controller 200 to intercom master device 100 will be described.

When the slave-device registering operation is performed on operation section 108, control section 120 of intercom master device 100 performs control to transmit a control signal that indicates as being registered and carries a master-device identification code stored in first storage section 103 from radio section 101 and to receive a registration request signal from remote controller 200. As the master device identification information, an individual value is allotted to each radio communication apparatus and written to first storage section 103 at the time of manufacture of intercom master device 100 so that there is no duplication occurred in the devices performing radio communication in a same communication mode.

In the meantime, when the slave-device registering operation is performed on operation section 211, control section 220 of remote controller 200 sets radio section 201 to a reception state and searches the control signal that indicates as being registered and is transmitted from intercom master device 100. Upon receiving the control signal indicating as being registered, control section 220 of remote controller 200 controls radio section 201 to transmit a registration request signal carrying the slave device identification code stored in first storage section 203 to intercom master device 100. As the slave device identification information, an individual value is allotted to each radio communication apparatus and written to first storage section 203 at the time of manufacture of remote controller 200 so that there is no duplication occurred in the devices performing radio communication in a same communication mode.

Upon receiving the registration request transmitted from remote controller 200, control section 120 of intercom master device 100 generates random numbers and transmits the generated random numbers and a slave-device call number determined by control section 120 itself to remote controller 200. Then, control section 120 generates an encryption key with a predetermined algorithm by using the transmitted random numbers, and writes the slave device identification code, the encryption key, and the slave-device call number to first storage section 103. Further, control section 120 writes the initial value of communication number, that is, "0", to first storage section 103. Further, control section 120 performs control to start up timer 109, to start monitoring of communication intervals with remote controller 200, to transmit the control signal carrying the master device identification code stored in first storage section 103 from radio section 101, and to shift to a standby state for waiting for communication from remote controller 200.

Upon receiving the random numbers and the slave-device call number transmitted from intercom master device 100, control section 220 of remote controller 200 generates an encryption key with the predetermined algorithm by using the received random numbers and writes the master device identification code, the encryption key, and the slave-device call number to first storage section 203. Further, control section 220 writes the initial value of communication number, that is, "0", to first storage section 203. Further, control section 220 stores the master device identification code and the slave-device call number to third storage section 213. Then, control section 220 of remote controller 200 sets the time to wait before transmitting the battery remaining amount notification to timer 212 and gives an instruction to power-supply control section 215 to shut down the power from battery 210. When instructed by control section 220 to shut down the power, power-supply control section 215 shuts down supply of the power to radio section 201, encryption section 202, first storage section 203, second storage section 204, voltage detection section 205, and control section 220, and remote controller 200 shifts to a standby state.

Next, the standby state of remote controller 200 will be described. The standby state of remote controller 200 is a state where supply of the power to radio section 201, encryption section 202, first storage section 203, second storage section 204, voltage detection section 205, and control section 220 is shut down to suppress the power consumption to prepare for the next locking/unlocking operation and battery remaining amount notification. Even during the standby state, the power is supplied to third storage section 213 from battery 210, and the above-described master device identification code and the slave-device call number written at the time of registration of the slave device are maintained. Similarly, the power is supplied also to timer 212 from battery 210 even during the standby state, and counting of the time set by control section 220 before shifting to the standby state is continued.

Next, operations of remote controller 200 for transmitting the battery remaining amount notification to intercom master device 100 will be described.

In the above-described standby state, timer 212 outputs a trigger signal to power-supply control section 215 for setting ON the power supplied from battery 210 when the timer is expired. When the trigger signal is inputted from timer 212, power-supply control section 215 supplies the power to radio section 201, encryption section 202, first storage section 203, second storage section 204, voltage detection section 205, and control section 220. Upon supply of the power, control section 220 detects a startup factor from the state of operation section 211 and timer 212. Upon detecting that the startup factor is the expiration of timer 212, control section 220 reads the master device identification code and the slave-device call number from third storage section 213 and reads voltage information of battery 210 from voltage detection section 205. Then, control section 220 sets radio section 201 to be in a reception state, and searches the control signal carrying the master device identification code that is read out from third storage section 213. Upon receiving the control signal of registered intercom master device 100, control section 220 controls radio section 201 to transmit, to intercom master device 100, a communication start request including the slave-device call number and a flag indicating that succeeding data is not encrypted, the battery remaining amount notification composed based on the battery information detected by voltage detection section 205, and a signal made up of data for detecting reception errors.

In the meantime, upon receiving the communication start request including the slave-device call number and the flag indicating that the succeeding data is not encrypted, the battery remaining amount notification composed based on the battery information detected by voltage detection section 205, and the signal made up of data for detecting reception errors from remote controller 200, control section 120 of intercom master device 100 first checks whether or not reception data is proper based on the data for detecting the reception errors. When the received data is proper, control section 120 then compares the received slave-device call number with the slave-device call number allotted to remote controller 200 and stored in first storage section 103 to check whether the source is remote controller 200 registered to control section 120 itself. When the received slave-device call number matches the slave-device call number allotted to remote controller 200 and stored in first storage section 103 and the flag indicating that the succeeding data is not encrypted is included, control section 120 controls radio section 101 to transmit a message of communication start acknowledgement to remote controller 200 and to stop the communication after completing the transmission. Then, control section 120 displays the battery remaining amount of remote controller 200 on display section 105 according to the received battery remaining amount notification, and restarts timer 109.

Upon receiving the message of communication start acknowledgement from intercom master device 100, control section 220 of remote controller 200 sets the time to wait before transmitting the next battery remaining amount notification to timer 212, and gives an instruction to power-supply control section 215 to shut down the power from battery 210. Upon receiving the instruction to shut down the power from control section 220, power-supply control section 215 shuts down supply of the power to radio section 201, encryption section 202, first storage section 203, second storage section 204, voltage detection section 205, and control section 220, and remote controller 200 shifts to a standby state.

When the control signal transmitted from intercom master device 100 cannot be received within a prescribed time at the time of searching the control signal carrying the master device identification code read out from third storage section 213 and when the message of communication start acknowledgement cannot be received within a prescribed time, control section 220 of remote controller 200 sets the time to wait before transmitting the next battery remaining amount notification to timer 212 and gives an instruction to power-supply control section 215 to shut down the power from battery 210. When instructed by control section 220 to shut down the power, power-supply control section 215 shuts down supply of the power to radio section 201, encryption section 202, first storage section 203, second storage section 204, voltage detection section 205, and control section 220, and remote controller 200 shifts to a standby state.

Next, described are operations to be performed when there is a locking/unlocking operation performed on operation section 211 of remote controller 200.

When detecting in the above-described standby state that an operation for giving an instruction to lock/unlock is performed on operation section 211, power-supply control section 215 supplies the power to radio section 201, encryption section 202, first storage section 203, second storage section 204, voltage detection section 205, and control section 220. Upon supply of the power, control section 220 detects the startup factor from the state of operation section 211 and timer 212. When detected that the startup factor is the locking/unlocking operation performed on operation section 211, control section 220 reads the slave device identification code, the encryption key, and the communication number from first storage section 203 and reads the master device identification code and the slave-device call number from third storage section 213. Then, control section 220 sets radio section 201 to be in a reception state, and searches the control signal carrying the master device identification code read out from third storage section 213. Then, upon receiving the control signal of registered intercom master device 100, control section 220 updates the communication number, and controls encryption section 202 to encrypt a message of a lock request or an unlock request by using the master device identification code, the slave device identification code, the communication number, and the encryption key according to the operation of operation section 211. Then, control section 220 controls radio section 201 to transmit, to intercom master device 100, a communication start request including a flag indicating to be encrypted, the encrypted lock request or unlock request generated and encrypted in encryption section 202, and the signal made up of the data for detecting reception errors.

In the meantime, upon receiving the communication start request including a flag indicating the slave-device call number and succeeding data to be encrypted, the encrypted lock request or unlock request, and the signal made up of the data for detecting reception errors from remote controller 200, control section 120 of intercom master device 100 first checks whether or not the reception data is proper based on the data for detecting the reception errors. When the received data is proper, control section 120 then compares the received slave-device call number with the slave-device call number allotted to remote controller 200 and stored in first storage section 103 to check whether the source is remote controller 200 registered to control section 120 itself. When the received slave-device call number matches the slave-device call number allotted to remote controller 200 and stored in first storage section 103 and the flag indicating that the succeeding data is encrypted is included, control section 120 controls radio section 101 to transmit a message of communication start acknowledgement to remote controller 200, updates the communication number, and controls decryption section 102 to decrypt the received data by using the master device identification code, the slave device identification code, the communication number, and the encryption key. Then, when the decrypted received data is a lock request or an unlock request, control section 120 controls electric lock 110 to lock or unlock according to the received data, controls display section 105 to display that it is in a locked state or an unlocked state, and restarts timer 109. Further, when the decrypted received data is a lock request or an unlock request, control section 120 controls radio section 101 to transmit a message of data reception response to remote controller 200 and, upon receiving a communication disconnection request to be described later, controls radio section 101 to transmit a message of communication disconnect acknowledgement to remote controller 200 and to stop the communication after completing the transmission.

When the message of communication start acknowledgement and a data reception response are received from intercom master device 100 after transmitting the communication start request and the lock request or the unlock request, control section 220 of remote controller 200 controls radio section 201 to transmit a communication disconnection request. When receiving the communication disconnect acknowledgement, control section 220 of remote controller 200 writes the communication number to first storage section 203, sets the time to wait before transmitting the next battery remaining amount notification to timer 212, and gives an instruction to power-supply control section 215 to shut down the power from battery 210. When instructed by control section 220 to shut down the power, power-supply control section 215 shuts down supply of the power to radio section 201, encryption section 202, first storage section 203, second storage section 204, voltage detection section 205, and control section 220. Remote controller 200 shifts to a standby state.

When the control signal transmitted from intercom master device 100 cannot be received within a prescribed time at the time of searching the control signal carrying the master device identification code read out from third storage section 213, when the message of communication start acknowledgement and data reception response cannot be received within a prescribed time, and when the communication disconnect acknowledgement cannot be received within a prescribed time, control section 220 of remote controller 200 sets the time to wait before transmitting the next battery remaining amount notification to timer 212, and gives an instruction to power-supply control section 215 to shut down the power from battery 210. When instructed by control section 220 to shut down the power, power-supply control section 215 shuts down supply of the power to radio section 201, encryption section 202, first storage section 203, second storage section 204, voltage detection section 205, and control section 220. Remote controller 200 shifts to a standby state.

Next, operations performed when exchanging the battery in remote controller 200 will be described.

When battery 210 is connected to remote controller 200, power-supply control section 215 supplies the power to radio section 201, encryption section 202, first storage section 203, second storage section 204, voltage detection section 205, and control section 220. Upon supply of the power, control section 220 detects the startup factor from the state of operation section 211 and timer 212. Upon detecting that the startup factor is the connection of battery 210, control section 220 reads the master device identification code and the slave-device call number from first storage section 203 and writes the master device identification code and the slave-device call number to third storage section 213. Then, control section 220 sets the time to wait before transmitting the next battery remaining amount notification to timer 212, and gives an instruction to power-supply control section 215 to shut down the power from battery 210. When instructed by control section 220 to shut down the power, power-supply control section 215 shuts down supply of the power to radio section 201, encryption section 202, first storage section 203, second storage section 204, voltage detection section 205, and control section 220, and remote controller 200 shifts to a standby state.

Next, operations performed when timer 109 of intercom master device 100 is expired will be described.

When timer 109 of intercom master device 100 is expired, timer 109 indicates timer expiration to control section 120. When timer expiration is indicated, control section 120 performs control to lock electric lock 110 and to display on display section 105 that it is in a locked state.

As described above, remote controller 200 of the locking/unlocking system according to Embodiment 1 of the present invention performs communication via encrypted communication only for the communication for performing the locking/unlocking operations but the battery remaining amount notification is communicated without encryption so that, even when the communication between intercom master device 100 and remote controller 200 is intercepted, security for the communication for performing the locking/unlocking operations can be maintained without increasing the risk of having the encryption method of the communication for the locking/unlocking operations decrypted even when the battery remaining amount notification is frequently transmitted and received. Further, remote controller 200 regularly indicates the battery remaining amount during a normal state (standby state), and intercom master device 100 displays the battery remaining amount of remote controller 200 according to the battery remaining amount notification. Therefore, the user can check the battery remaining amount of remote controller 200 on the display of intercom master device 100, so that dead battery of remote controller 200 can easily be prevented and the convenience can be improved. Further, when the battery remaining amount notification is ceased, intercom master device 100 locks electric lock 110. Therefore, if the user carries remote controller 200 and goes out, the key is automatically locked even when the user forgets to lock, thereby improving the convenience and safety. Further, when the locking operation by remote controller 200 fails due to a communication error, the key is automatically locked if the battery remaining amount notification is ceased so that the safety can be improved even when a criminal outputs an interfering wave to interrupt the locking operation by remote controller 200, for example.

Next, the radio communication method according to Embodiment 1 of the present invention will be described.

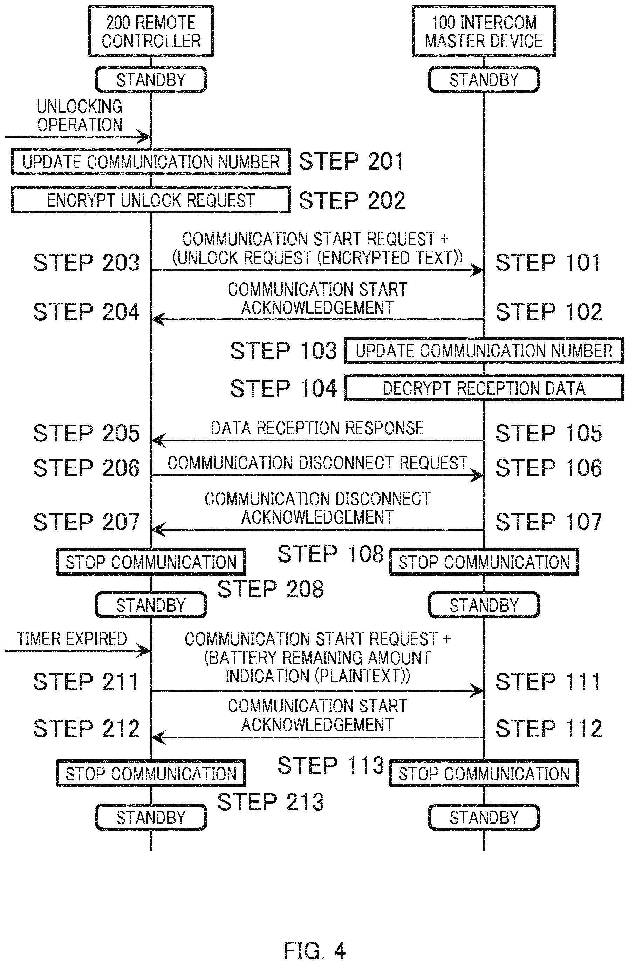

FIG. 4 is a sequence chart illustrating a sequence example of the radio communication method according to Embodiment 1, which illustrates an example of the sequence when the radio communication method of the present invention is used for the unlocking operation and the battery remaining amount notification of the locking/unlocking system described above. Hereinafter, the sequence of the radio communication method according to Embodiment 1 will be described by using FIG. 4.

First, the sequence for transmitting/receiving data by using encrypted communication will be described. When an unlocking operation is performed in remote controller 200 during a standby state, remote controller 200 updates the communication number (step 201), and encrypts transmission data, that is, an unlock request by using the master device identification code, the slave device identification code, the encryption key, and the communication number (step 202). Then, remote controller 200 transmits, to intercom master device 100, the encrypted unlock request along with a communication start request for requesting startup of radio communication including information indicating the origin, information indicating the destination, and information indicating that the succeeding message is encrypted along with (step 203).

Upon receiving the communication start request and the encrypted unlock request during the standby state (step 101), intercom master device 100 determines whether or not it is the communication directed for intercom master device 100 itself from the information indicating the destination of the communication start request and whether or not it is the communication from registered remote controller 200 from the information indicating the origin. When it is the communication start request directed for intercom master device 100 itself from registered remote controller 200, intercom master device 100 transmits a communication start acknowledgement to remote controller 200. Thereby, bidirectional radio communication channel between remote controller 200 and intercom master device 100 is established (step 102). Subsequently, intercom master device 100 updates the communication number (step 103), and decrypts the reception data received along with the communication start request by using the master device identification code, the slave device identification code, the encryption key, and the communication number (step 104). In the example of FIG. 4, when the reception data is properly decrypted by using the master device identification code, the slave device identification code, the encryption key, and the communication number and the decrypted reception data is the proper unlock request, intercom master device 100 transmits a data reception response to remote controller 200 and performs the operation (unlocking operation in the example of FIG. 4) according to the message indicated with the reception data (step 105).

Remote controller 200 receives the communication start acknowledgement from intercom master device 100, and the radio communication channel is established thereby (step 204). When the communication start acknowledgement cannot be received after transmission of the communication start request in step S203, the sequence is re-executed from transmission of the communication start request and the encrypted unlock request of step 203 (not illustrated). By receiving the data reception response after the radio communication channel is established, remote controller 200 recognizes that the transmitted unlock request is received properly (step 205), starts an operation for disconnecting the communication and transmits a communication disconnection request (step 206).

Upon receiving the communication disconnection request (step 106), intercom master device 100 transmits a communication disconnect acknowledgement to remote controller 200 (step 107) and stops transmission/reception on the radio communication channel via which communication of the messages and data is performed with remote controller 200 (step 108).

Upon receiving the communication disconnect acknowledgement after transmitting the communication disconnection request (step 207), remote controller 200 stops transmission/reception on the radio communication channel via which the communication of the messages and data is performed with intercom master device 100 (step 208).

Next, the sequence for transmitting/receiving data without encryption will be described. When the timer for occurrence of event of the battery remaining amount notification in remote controller 200 is expired during the standby state, a battery remaining amount notification in unencrypted plaintext is transmitted to intercom master device 100 along with a communication start request for requesting the start of radio communication including information indicating the origin, information indicating the destination, and information indicating that a succeeding message is not encrypted (step 211).

Upon receiving the communication start request and the plaintext message (the battery remaining amount notification in the example of FIG. 4) during the standby state (step 111), intercom master device 100 determines whether or not it is the communication directed for intercom master device 100 itself from the information indicating the destination of the communication start request and whether or not it is the communication from registered remote controller 200 from the information indicating the origin. When it is the communication start request directed for intercom master device 100 itself from registered remote controller 200, intercom master device 100 performs an operation for displaying the battery remaining amount according to the received message (the battery remaining amount notification in the example of FIG. 4), transmits the communication start acknowledgement to remote controller 200 (step 112), and stops the communication to return to a standby state (step 113).

Remote controller 200 recognizes that the transmitted data (the battery remaining amount notification in the example of FIG. 4) on the radio communication channel has reached intercom master device 100 upon receiving the communication start acknowledgement from intercom master device 100 (step 212), stops the communication, and returns to the standby state (step 213). When the communication start acknowledgement cannot be received after transmission of the communication start request in step 211, the sequence is re-executed from transmission of the communication start request and the battery remaining amount notification of step 211 (not illustrated).

As described, whether to perform transmission/reception under encryption or in plaintext is switched according to the message, so that frequency of the encrypted communication can be decreased. Therefore, it is possible to prevent the communication method of the encrypted communication from leaking even when the communication is intercepted, so that it is effective for preventing fake remote controllers from being forged.

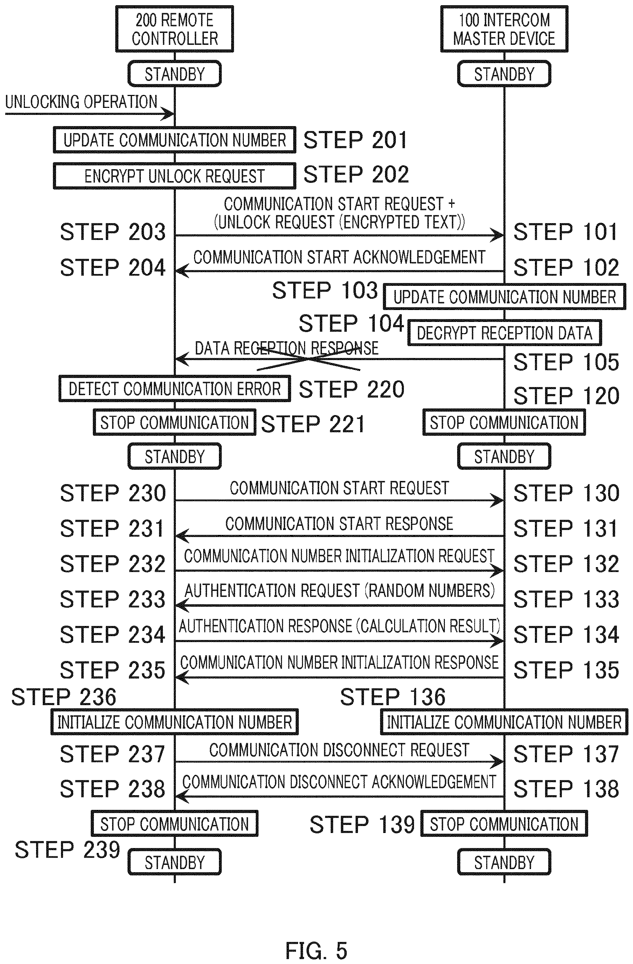

FIG. 5 is a sequence chart illustrating a sequence for initializing the communication number of the locking/unlocking system according to Embodiment 1, which illustrates an example of the sequence when performing initialization of the communication number in a case where the radio communication is abnormally disconnected during the unlocking operation of the locking/unlocking system described above. Hereinafter, the sequence for initializing the communication number in the radio communication method according to Embodiment 1 will be described by using FIG. 5. Note that same reference numerals as those of FIG. 4 are applied to operational components of FIG. 5 same as those of FIG. 4, and a part of explanations is omitted.

First, described is the sequence until abnormal disconnection of the radio communication occurs during the unlocking operation of the locking/unlocking system. As described above by using FIG. 4, when an unlocking operation is performed in remote controller 200, the communication number is updated (step 201) and an unlock request encrypted by using the communication number and the like is transmitted to intercom master device 100 along with a communication start request (step 202, step 203). In the meantime, upon receiving the unlock request encrypted by using the communication number and the like along with the communication start request, intercom master device 100 transmits a communication start acknowledgement (step 102), updates the communication number (step 103), decrypts the reception data (step 104), and transmits a data reception response to remote controller 200 (step 105).

Note here that when the data reception response transmitted in step 105 does not reach remote controller 200 because there is an occurrence of a radio frequency interference or the like, remote controller 200 detects that the data reception response cannot be received within a prescribed time after receiving the communication start acknowledgement of step 204 (step 220), and stops the radio communication (step 221). Further, because the communication of remote controller 200 is stopped, intercom master device 100 comes to have an reception error and stops the communication after a prescribed time (step 120).

When the communication of the message (unlock request in the example of FIG. 5) encrypted in the manner described above cannot be ended properly, remote controller 200 starts the operation for initializing the communication number. Remote controller 200 transmits a communication start request (step 230), intercom master device 100 upon receiving the communication start request from remote controller 200 (step 130) transmits a communication starting response to remote controller 200 (step 131), and a new radio communication channel is established when remote controller 200 receives the communication starting response (step 231).

When the radio communication channel is established, remote controller 200 transmits a communication number initialization request for requesting initialization of the communication number to intercom master device 100 (step 232). Upon receiving the communication number initialization request (step 132), intercom master device 100 generates random numbers and transmits an authentication request to remote controller 200 along with the random numbers in order to check that the request is from a proper partner (step 133). Upon receiving the authentication request and the random numbers, remote controller 200 performs a predetermined calculation by using the received random numbers and the encryption key to acquire a calculation result, and transmits an authentication response to intercom master device 100 along with the calculation result (step 234). Upon receiving the authentication response and the calculation result (step 134), intercom master device 100 performs a predetermined calculation by using the transmitted random numbers and the encryption key to acquire a calculation result, compares the calculation result with the received calculation result and, when matched, transmits a communication number initialization response (step 135) and initializes the communication number to the initial value (step 136). Upon receiving the communication number initialization response (step 235), remote controller 200 initializes the communication number to the initial value (step 236) and transmits a communication disconnection request (step 237). Upon receiving the communication disconnection request (step 137), intercom master device 100 transmits a communication disconnect acknowledgement (step 138) and stops the communication (step 139). Upon receiving the communication disconnect acknowledgement (step 238), remote controller 200 stops the communication (step 239).

As described, through providing a process for initializing the communication number used for encrypting the message, automatic recovery becomes possible without any specific operations performed by the user when a communication error occurs at the time of locking/unlocking operations and there is a difference generated in the reception numbers between the transmitting station and the receiving station, thereby making it possible to improve the convenience. When recovery processing is started from the transmitting station (remote controller 200 in the example of FIG. 5), the receiving station (intercom master device 100 in the example of FIG. 5) performs a predetermined calculation using the key (encryption key in the above-described explanations) and the random numbers not transmitted/received via the radio communication and performs authentication by using the calculation result. Therefore, it is not possible to pretend as being the receiving station to start the recovery processing, so that the security can be enhanced.

While the examples of a preferable embodiment of the present invention have been described above, the present invention is not limited to those examples but various changes are possible without departing from of the gist of the present invention as will easily be comprehended by those skilled in the art. For example, while the example of mounting the locking/unlocking system of the present invention to a home-use intercom is described in the embodiment, the locking/unlocking system of the present invention can also be mounted to a home automation network to which sensors and cameras are connected. Further, all of the structural components shown in the embodiment are not necessarily essential but may be selected as appropriate without departing from the gist of the present invention.

### Industrial Applicability

The locking/unlocking system according to the present invention is effective as a locking/unlocking system for locking/unlocking entrances and the like of houses, and is capable of improving the convenience and decreasing the price without weakening the security.

Further, the radio communication method according to the present invention is effective as a radio communication method of the locking/unlocking system for locking/unlocking entrances and the like of houses by performing encrypted communication or communication with plaintext, and is capable of improving the convenience and decreasing the price without weakening the security.

### Reference Signs List

100 Intercom master device
110 Electric lock
200 Remote controller
300 Entrance slave device

## Claims

1. A locking/unlocking system, comprising an electric key apparatus and a terminal apparatus, the electric key apparatus including an electric lock for locking/unlocking an entrance, wherein
the terminal apparatus comprises:
a first radio section that communicates by radio with the electric lock apparatus;
an operation section for performing a locking operation or an unlocking operation for the electric lock apparatus;
an encryption section that generates a first signal by encrypting a message for indicating the locking operation or the unlocking operation; and
a first control section that controls the first radio section to transmit an unencrypted second signal for indicating predetermined information to the electric lock apparatus at a predetermined timing, and controls the first radio section to transmit the first signal to the electric lock apparatus, and
the electric lock apparatus comprises:
a second radio section that communicates by radio with the terminal apparatus;
a decryption section that decrypts the first signal transmitted from the terminal apparatus; and
a second control section that controls the electric lock to lock/unlock the entrance according to an indicated content of the message of the first signal.

2. The locking/unlocking system according to claim 1, wherein:
the encryption section encrypts the message by using an identification number of the electric lock apparatus, an identification number of the terminal apparatus, a communication number to be updated for each encrypted communication, and a predetermined encryption key to generate the first signal;
the decryption section decrypts the first signal by using the identification number of the electric lock apparatus, the identification number of the terminal apparatus, the communication number updated for each encrypted communication, and the predetermined encryption key; and
the encryption key is generated when the terminal apparatus is to be registered to the electric lock apparatus.

3. The locking/unlocking system according to claim 1 or 2, wherein, when no communication with the terminal apparatus occurs for a predetermined length of time or more, the second control section controls the electric lock to lock the entrance.

4. The locking/unlocking system according to any one of claims 1 to 3, wherein
the terminal apparatus further comprises:
a first storage section formed of a nonvolatile memory;
a second storage section formed of a volatile memory;
a battery that supplies power;
a timekeeping section that keeps a prescribed time;
a third storage section formed of a volatile memory; and
a power-supply control section that starts supply of the power to the first storage section, the second storage section, the first radio section, the encryption section, and the first control section when the battery is loaded, when the locking operation or the unlocking operation is performed on the operation section, or when a timer of the timekeeping section is expired, and shuts down supply of the power to the first storage section, the second storage section, the first radio section, the encryption section, and the first control section according to an instruction of the first control section, and wherein
the first control section, upon supply of the power, determines whether the battery is loaded, the locking operation or the unlocking operation is performed, or the timer of the timekeeping section is expired,
when determining that the battery is loaded, the first control section reads information necessary for indicating the predetermined information by the second signal from the first storage section and writes the information to the third storage section, sets time to wait before indicating the predetermined information by the second signal to the timekeeping section, and gives an instruction to the power-supply control section to shut down the supply of the power,
when determining that the locking operation or the unlocking operation is performed, the first control section reads information necessary for indicating that the locking operation or the unlocking operation is performed by the first signal from the first storage section, indicates the electric lock apparatus that the locking operation or the unlocking operation is performed by the first signal, updates the information that needs to be updated because of the communication among the information stored in the first storage section, and gives an instruction to the power-supply control section to shut down the supply of the power, and
when determining that the timer of the timekeeping section is expired, the first control section reads the information from the third storage section, indicates the predetermined information to the electric lock apparatus by the second signal, sets time to wait before indicating information predetermined by the second signal to the timekeeping section, and gives an instruction to the power-supply control section to shut down supply of the power.

5. The locking/unlocking system according to any one of claims 1 to 4, wherein,
the electric lock apparatus is provided to an intercom master device, wherein
the intercom master device comprises a second operation section on which a locking operation or an unlocking operation is performed for the electric locking apparatus; and
the second control section controls the electric lock to lock/unlock the entrance according to a content of a message indicating the locking operation or the unlocking operation transmitted from the intercom master device.

6. The locking/unlocking system according to claim 5, wherein
the terminal apparatus further comprises a battery remaining amount detection section that detects a battery remaining amount, wherein
the predetermined information is information regarding the battery remaining amount,
the first control section controls the first radio section to include the information regarding the battery remaining amount detected by the battery remaining amount detection section in the second signal and to transmit the second signal to the intercom master device at a predetermined timing; and
the intercom master device displays the battery remaining amount of the terminal apparatus.

7. A radio communication method transmitting data from a transmitting station to a receiving station via radio communication, the method comprising:
when transmitting encrypted data from the transmitting station to the receiving station,
by the transmitting station,
updating a communication number,
encrypting transmission data by using a predetermined encryption key and the communication number, and
transmitting the encrypted data along with a communication start request,
by the receiving station,
transmitting a communication starting response upon receiving the communication start request,
updating a communication number upon receiving the encrypted data,
decrypting the received encrypted data by using the predetermined encryption key and the communication number, and
transmitting a data reception response when the decrypted data is proper,
by the transmitting station, transmitting a communication disconnection request upon receiving the data reception response,
by the receiving station, transmitting a communication disconnection response and stopping the radio communication upon receiving the communication disconnection request, and
by the transmitting station, stopping the radio communication upon receiving the communication disconnection response; and
when transmitting unencrypted data from the transmitting station to the receiving station,
by the transmitting station, transmitting the unencrypted data along with a communication start request,
by the receiving station, transmitting the communication starting response and stopping the radio communication upon receiving the communication start request and the unencrypted data,
by the transmitting station, transmitting a communication disconnection request upon receiving the data reception response, and
by the receiving station, stopping the radio communication upon receiving the communication starting response.

8. The radio communication method according to claim 7, comprising:
by the transmitting station, setting the communication number to a predetermined initial value and transmitting a request signal for returning the communication number to the initial value to the receiving station when the communication with the receiving station is ceased before receiving a communication disconnect acknowledgement when transmitting the encrypted data from the transmitting station to the receiving station; and
by the receiving station, upon receiving the request signal for returning the communication number to the initial value, setting the communication number to the predetermined initial value and transmitting a response signal indicating that the communication number is returned to the initial value.
